# EUROPEAN PATENT APPLICATION

(11) **EP 3 875 942 A1**
(43) Date of publication of application: **08.09.2021**
(21) Application number: 19879953.8
(22) Date of filing: 29.10.2019
(51) Int. Cl.: G01N 15/10

(54) **POROUS SAMPLE FEEDING CELL COUNTER AND COUNTING METHOD**

(30) Priority: 31.10.2018 CN 201811291162
(71) Applicant: Jiangsu Jimbio Technology Co., Ltd., Changzhou, Jiangsu 213125 (CN)
(72) Inventor: WU, Xudong, Changzhou, Jiangsu 213125 (CN); LIU, Peng, Changzhou, Jiangsu 213125 (CN); ZHANG, Yu, Changzhou, Jiangsu 213125 (CN); LI, Huijuan, Changzhou, Jiangsu 213125 (CN); SHUAI, Yu, Changzhou, Jiangsu 213125 (CN)
(74) Representative: Opilex
(86) International application number: PCT/CN2019/114119
(87) International publication number: WO 2020/088474

(57) **Abstract**

Disclosed are a porous sample feeding cell counter (1000) and a counting method, relating to the technical field of cell counting apparatuses. The porous sample feeding cell counter (1000) comprises: a housing (200), wherein an accommodation space (201) is provided inside the housing (200), and the housing (200) is provided with a sample adding port (202); a porous sample feeding apparatus (100), wherein the porous sample feeding apparatus (100) is disposed in the accommodation space (201), the porous sample feeding apparatus (100) comprises a porous sample adding plate (50), the porous sample adding plate (50) comprises multiple sample adding holes (51), and the sample adding holes (51) can accommodate samples; a counting module (300), wherein the counting module (300) is detachably mounted in the accommodation space (201), the counting module (300) is configured to detect the sample, and the counting module (300) comprises a counting chip (301); and a control system (700), wherein the control system (700) can control the rotation of the porous sample adding plate (50) and enable at least one sample adding hole (51) to correspond to the sample adding port (202) in terms of position, and can also enable at least one sample adding hole (51) to correspond to a sample feeding hole (3010) of the counting chip (301) in terms of position. The porous sample feeding cell counter (1000) can facilitate an operator in adding multiple samples to be detected at a time, so that the time required for an operation of adding a sample when detecting a cell sample is saved.

## Description

### Cross-reference to Related Application

The present disclosure claims the priority to the Chinese Patent Application with the filing No. 201811291162.X, filed on October 31, 2018 with the Chinese Patent Office, entitled "Porous Sample Feeding Cell Counter", the contents of which are incorporated herein by reference in entirety.

### Technical Field

The present disclosure relates to the technical field of cell counting apparatuses, and in particular, to a multi-well (porous) sample feeding cell counter and a counting method.

### Background Art

In a large number of cell bioresearch experiments, concentration detection (quantitative counting) needs to be performed on cells or other biological particles. Cell suspension concentration (or number), being both a monitoring parameter of cell culture and a necessary parameter in many experimental items, is a quite basic but important process condition for successfully completing experiments. Relevant counting means mainly adopts a manual counting method with a cell counting plate, and has the following shortcomings in operation and use:
when a plurality of cell samples need to be detected, an operator needs to add the sample and then wait for the result, and then add next sample to detect, while a plurality of samples to be tested cannot be added at one time.

### Summary

The present disclosure aims at, for example, providing a multi-well sample feeding cell counter, which can facilitate an operator in adding a plurality of samples to be detected at one time, and thus save the operation time of adding samples required when detecting the cell samples.

The present disclosure further aims at providing a counting method, through which method the operation time of adding samples required when detecting the cell samples may be saved.

An example of the present disclosure is implemented as follows:
An example of the present disclosure provides a multi-well sample feeding cell counter, including:
a housing, wherein an accommodation space is formed inside the housing, and the housing has a sample adding port;
a multi-well sample feeding apparatus, wherein the multi-well sample feeding apparatus is provided in the accommodation space, the multi-well sample feeding apparatus includes a multi-well sample adding plate, the multi-well sample adding plate includes a plurality of sample adding holes, and the sample adding holes are capable of accommodating samples;
a counting module, wherein the counting module is detachably mounted in the accommodation space, the counting module is configured to detect the samples, and the counting module includes a counting chip; and
a control system, wherein the control system is capable of controlling the multi-well sample adding plate to rotate and enables at least one of the sample adding holes to correspond to the sample adding port in position, and also is capable of enabling at least one of the sample adding holes to correspond to a sample feeding hole of the counting chip in position.

Besides, the multi-well sample feeding cell counter provided in an example of the present disclosure further may have the following additional technical features:
In an optional example of the present disclosure, the multi-well sample feeding apparatus further includes a mounting bracket, a motor unit and a vacuum chuck mechanism, and the mounting bracket is provided in the accommodation space,
wherein the motor unit includes a first linear stepper motor, a second linear stepper motor and a rotating stepper motor;
a central portion of the multi-well sample adding plate is connected to an output end of the rotating stepper motor, the first linear stepper motor is mounted on the mounting bracket, the rotating stepper motor is connected to an output end of the first linear stepper motor and is capable of moving up and down driven by the first linear stepper motor, and the multi-well sample adding plate is arranged with a plurality of the sample adding holes provided in an axial direction at a position close to an edge; and
the vacuum chuck mechanism includes a chuck holder and a vacuum chuck, the chuck holder is connected to an output end of the second linear stepper motor, the vacuum chuck is mounted on the chuck holder and located above the multi-well sample adding plate, position of the vacuum chuck is at least corresponding to position of one of the sample adding holes, position of at least one of the vacuum chucks is corresponding to position of the sample feeding hole of the counting chip, and the multi-well sample adding plate is located between the vacuum chuck and the counting chip,
in sample adding process, the sample is added to one of the sample adding holes at a sample adding position, the control system controls the rotating stepper motor to operate, and the multi-well sample adding plate rotates and allows the next one of the sample adding holes to be at the sample adding position; and
in sample feeding process, the multi-well sample adding plate is rotated driven by the rotating stepper motor, so that the sample adding hole having been added with the sample moves to below the vacuum chuck and stops, the control system controls the first linear stepper motor to operate such that the rotating stepper motor is lowered and the multi-well sample adding plate is lowered to be fitted with the counting chip, the sample adding hole is in communication with the sample feeding hole, and the control system controls the second linear stepper motor to operate so that the vacuum chuck is lowered and fitted with the multi-well sample adding plate, the sample adding hole, the vacuum chuck and the sample feeding hole of the counting chip form a sealed pipeline, and the sample in the sample adding hole is capable of entering the sample feeding hole of the counting chip under the action of a pressure source connected to the counting chip.

In an optional example of the present disclosure, the motor unit further includes a third linear stepper motor, and the multi-well sample feeding cell counter further includes a trypan blue liquid outlet mechanism, the trypan blue liquid outlet mechanism includes a liquid outlet component, the third linear stepper motor is mounted on the mounting bracket, an output end of the third linear stepper motor is in transmission connection with the liquid outlet component and is capable of moving the liquid outlet component up and down,
when trypan blue sample mixing is needed, the control system controls the third linear stepper motor to operate, so that the liquid outlet component is raised, the first linear stepper motor operates and allows the multi-well sample adding plate to be lowered, the second linear stepper motor operates and allows the vacuum chuck to be lowered, then the liquid outlet component, the sample adding hole and the vacuum chuck form a sealed pipeline.

In an optional example of the present disclosure, the trypan blue liquid outlet mechanism further includes a trypan blue liquid storage bottle, and the trypan blue liquid storage bottle is in communication with the liquid outlet component through a pipeline.

In an optional example of the present disclosure, the number of the vacuum chucks is two, a position of one of the vacuum chucks is corresponding to the liquid outlet component, and a position of the other one of the vacuum chucks is corresponding to the sample feeding hole of the counting chip.

In an optional example of the present disclosure, the sample adding hole has a sample adding section and a sample feeding section, the sample adding section and the sample feeding section are in communication with each other and the sample adding section and the sample feeding section are not arranged in direct communication.

In an optional example of the present disclosure, an inner wall of the sample adding section is divided into a straight cylindrical portion and a tapered cylindrical portion, the straight cylindrical portion and the tapered cylindrical portion are joined together, and diameter of sectional profile of the tapered cylindrical portion gradually decreases from one end close to the straight cylindrical portion toward the other end, and the sample feeding section and side wall of the tapered cylindrical portion are joined together.

In an optional example of the present disclosure, a sealing gasket is provided at each of upper and lower ends of the sample adding hole.

In an optional example of the present disclosure, the multi-well sample adding plate has 25 sample adding holes, and one of the sample adding holes is an initial calibration hole.

In an optional example of the present disclosure, the multi-well sample feeding apparatus further includes a sample adding hole cover, and the sample adding hole cover is configured to open or close the sample adding port, so as to block or expose the sample adding holes.

In an optional example of the present disclosure, the motor unit further includes a double motion motor, the double motion motor is mounted on the mounting bracket, an output end of the double motion motor is connected to the sample adding hole cover, the sample adding hole cover is located above the sample adding position, and the control system is capable of controlling the double motion motor to operate, so that the sample adding hole cover and the housing block the sample adding hole at the sample adding position or move the sample adding hole cover to expose the sample adding hole at the sample adding position.

In an optional example of the present disclosure, the multi-well sample feeding apparatus further includes a magnetic position sensor and a photoelectric encoder, the magnetic position sensor is mounted on the mounting bracket and configured to set an initial rotation position of the multi-well sample adding plate, the photoelectric encoder is mounted on the rotating stepper motor and is configured to feed back a rotation angle signal of the multi-well sample adding plate to the control system, the control system is configured to control the rotating stepper motor to operate or stop according to the initial rotation position and the rotation angle signal of the multi-well sample adding plate, so that the sample adding hole is capable of moving to an operation position.

In an optional example of the present disclosure, the multi-well sample feeding apparatus further includes a photoelectric sensor, the photoelectric sensor is capable of detecting the position of the multi-well sample adding plate in a vertical direction and capable of feeding back the position of the multi-well sample adding plate in the vertical direction to the control system, the control system is configured to control the first linear stepper motor to operate according to the position of the multi-well sample adding plate in the vertical direction, so that the multi-well sample adding plate is raised or lowered.

In an optional example of the present disclosure, the number of the photoelectric sensors is two, and the photoelectric sensors are distributed at intervals in the vertical direction.

In an optional example of the present disclosure, the multi-well sample feeding cell counter further includes an image acquisition module, and the image acquisition module is installed in the accommodation space and is electrically connected to the counting module.

In an optional example of the present disclosure, the image acquisition module includes a light source, a camera and an optical lens, the light source and the camera are electrically connected to the control system, respectively, and the optical lens is connected to the camera, wherein the light source is provided on one side of the counting chip and faces an image acquisition area of the counting chip, the camera is provided on the other side of the counting chip, and the optical lens faces the image acquisition area, the light source is capable of transmitting light to the image acquisition area under the control of the control system, and the camera is capable of acquiring a plurality of images of the sample flowing through the image acquisition area under the control of the control system, and send the images to the control system to process.

An example of the present disclosure further provides a counting method, which uses the above multi-well sample feeding cell counter, and the method includes:
adding a sample to the sample adding hole corresponding to the sample adding port through the sample adding port of the housing, controlling rotation of the multi-well sample adding plate by the control system, so that another one of the sample adding holes on the multi-well sample adding plate is corresponding to the sample adding port, and adding a sample to the sample adding hole, and repeating such operations multiple times analogically; and
controlling the sample adding hole having been added with the sample to move to the sample feeding hole of the counting chip, and counting, by the counting chip, the cells in the sample.

Compared with the prior art, beneficial effects of the present disclosure include, for example:
for the multi-well sample feeding cell counter, by controlling the multi-well sample adding plate of the multi-well sample feeding apparatus by the control system, the operator can add a plurality of samples when adding the samples, then, the sample in each sample adding hole is subjected to subsequent detection by the counting module or the like, without the need of detecting the samples one by one as in the case of the prior cell counters. Thus, the time required for sample adding operation is saved when detecting the cell samples, the operator's workload is reduced, and further the efficiency of the whole detection process is improved. Furthermore, there is no need to stay by the instrument all the time, and it is convenient for the operator to handle other affairs during the detection process.

### Brief Description of Drawings

In order to more clearly illustrate technical solutions of examples of the present disclosure, accompanying drawings which need to be used in the examples will be introduced below briefly, and it should be understood that the accompanying drawings below merely show some example of the present disclosure, and therefore should not be considered as limitation to the scope, and a person ordinarily skilled in the art still could obtain other relevant accompanying drawings according to these accompanying drawings, without using any creative effort.
FIG. 1 is a schematic view of a multi-well sample feeding cell counter, at one perspective, provided in an example of the present disclosure;
FIG. 2 is a schematic view of FIG. 1 with a part of a housing being cut away;
FIG. 3 is a schematic view of FIG. 2 with a part of the housing and components such as a display screen being omitted;
FIG. 4 is a partial enlarged view of part A in FIG. 3;
FIG. 5 is a schematic view of FIG. 3 at another perspective;
FIG. 6 is a schematic view of a multi-well sample adding plate;
FIG. 7 is a sectional view of a sample adding hole;
FIG. 8 is a schematic view of a counting module; and
FIG. 9 is a control block diagram of a control system and associated components thereof.

Reference signs: 1000-multi-well sample feeding cell counter; 100-multi-well sample feeding apparatus; 10-mounting bracket; 30-motor unit; 31-first linear stepper motor; 33-second linear stepper motor; 35-third linear stepper motor; 37-rotating stepper motor; 39-double motion motor; 50-multi-well sample adding plate; 51-sample adding hole; 510-sample adding section; 512-sample feeding section; 5121-straight cylindrical portion; 5123-tapered cylindrical portion; 53-sealing gasket; 55-sample adding hole cover; 56-position detection assembly; 57-magnetic position sensor; 59-photoelectric sensor; 61-photoelectric encoder; 70-vacuum chuck mechanism; 71-chuck holder; 73-vacuum chuck; 200-housing; 201-accommodation space; 202-sample adding port; 300-counting module; 301-counting chip; 3010-sample feeding hole; 400-trypan blue liquid outlet mechanism; 401-liquid outlet component; 402-trypan blue liquid storage bottle; 500-display screen; 600-image acquisition module; 601-light source; 602-camera; 603-optical lens; 700-control system.

### Detailed Description of Embodiments

In order to make objectives, technical solutions and advantages of the examples of the present disclosure clearer, the technical solutions in the examples of the present disclosure will be described clearly and completely below in conjunction with the accompanying drawings in the examples of the present disclosure, and apparently, some but not all examples of the present disclosure are described. Generally, components in the examples of the present disclosure described and shown in the accompanying drawings herein may be arranged and designed in different configurations.

Therefore, the detailed description below of the examples of the present disclosure provided in the accompanying drawings is not intended to limit the scope of protection of the present disclosure, but merely represents chosen examples of the present disclosure. Based on the examples of the present disclosure, all of other examples obtained by those ordinarily skilled in the art without using any creative effort shall fall within the scope of protection of the present disclosure.

It should be noted that similar reference signs and letters represent similar items in the following accompanying drawings, therefore, once a certain item is defined in one accompanying drawing, it is not needed to be further defined or explained in subsequent accompanying drawings.

In the description of the present disclosure, it should be indicated that orientation or positional relationships indicated by terms such as "upper" and "lower" are based on orientation or positional relationships as shown in the drawings, or orientation or positional relationships of a product of the invention when being conventionally placed in use, merely for facilitating describing the present disclosure and simplifying the description, rather than indicating or suggesting that related devices or elements have to be in the specific orientation or configured and operated in a specific orientation, therefore, they should not be construed as limiting the present disclosure.

Besides, terms such as "first" and "second" are merely used for distinctive description, but should not be construed as indicating or implying importance in the relativity.

In the description of the present disclosure, it further should be indicated that unless otherwise specified and defined explicitly, terms "provide" and "connect" should be construed in a broad sense. For example, it may be fixed connection, detachable connection, or integrated connection; it may be mechanical connection, and also may be electrical connection; it may be direct connection, indirect connection through an intermediary, or inner communication between two elements. For a person ordinarily skilled in the art, specific meanings of the above-mentioned terms in the present disclosure could be understood according to specific circumstances.

In the present disclosure, unless otherwise specified and defined explicitly, a first feature being on or under a second feature may include the first feature and the second feature being in direct contact, and also may include the first feature and the second feature being not in direct contact but being in contact through another feature therebetween. Moreover, the first feature being on, above or over the second feature includes the first feature being directly above or not directly above the second feature, or merely means the level of the first feature being higher than that of the second feature. The first feature being under, below or beneath the second feature includes the first feature being directly below or not directly below the second feature, or merely means the level of the first feature being lower than that of the second feature.

It should be indicated that the features in the examples of the present disclosure may be combined with each other if there is no conflict.

The relevant counting means generally is a manual counting method using a cell counting plate, or uses an automated counting instrument based on image analysis technology; or an automated counting instrument using a resistance method (Coulter principle). In the above, the manual counting method is the most prevalent, in which the experimenter injects the suspended cell sample into a counting chamber of the cell counting plate, and observes the sample under a microscope with naked eyes and counts manually according to rules. Main drawbacks of this method are as follows.
1. As the depth of the counting chamber itself is several times of the cell dimension, the cell samples will suspend in a layered manner therein after being injected. Thus, the observed cell morphologies will be different, resulting in inaccuracy of counting result and error in cell activity judgment.
2. If the sample injected into the cell counting plate is 10 µL by the rules, the amount of sample in a microscope observation area is only a small fraction, less than 1 µL. Thus, whether the cell sample is distributed uniformly in the counting chamber will have a great influence on the result.
3. The counting is performed manually according to certain rules, then the difference in levels of operators and the degree of fatigue caused by observation with naked eyes will cause large human errors.

Although the automated instrument based on image analysis technology avoids the difficulty of observation with naked eyes, there are still the following shortcomings.
1. The use of disposable consumable counting sheet is introduced, thus increasing the user's detection cost.
2. The counting sheet is structurally similar to the cell counting plate, then there is also the problems of inaccuracy of results and misjudgment of activity caused by layered suspension of cells on the counting plate.
3. Like manual counting, most instruments based on image method suffer from the problem of large deviation in results caused by a small amount of samples detected.

Although the automated counting instrument (cell counter) using resistance method (Coulter principle) may avoid the defects and shortcomings of two counting methods of the above, it still has the following shortcomings: when a plurality of cell samples need to be detected, an operator needs to add the sample and then wait for a result, and then add the next sample to detect, but cannot add a plurality of samples to be tested at one time.

A multi-well sample feeding cell counter 1000 and a counting method provided in the present example may alleviate this technical defect, and specifically, the structure of the multi-well sample feeding cell counter 1000 will be introduced in detail below.

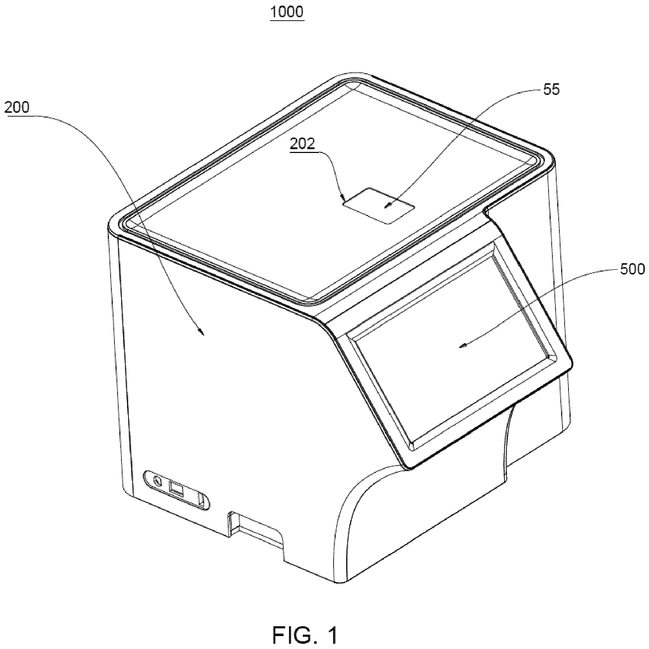

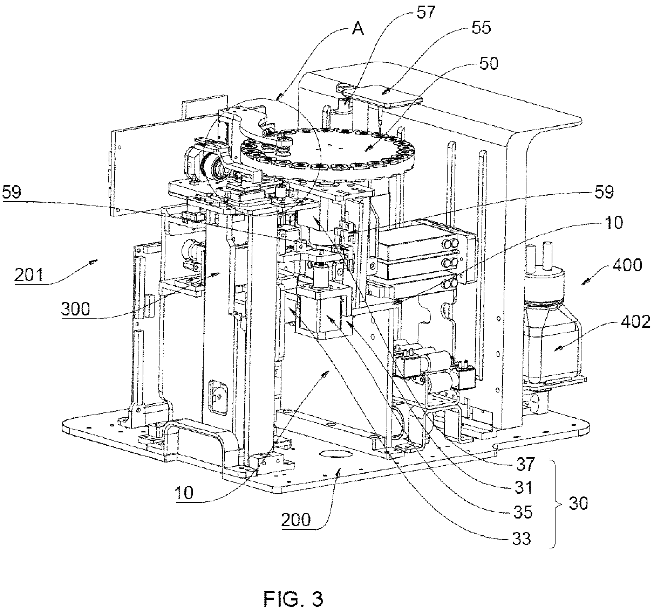

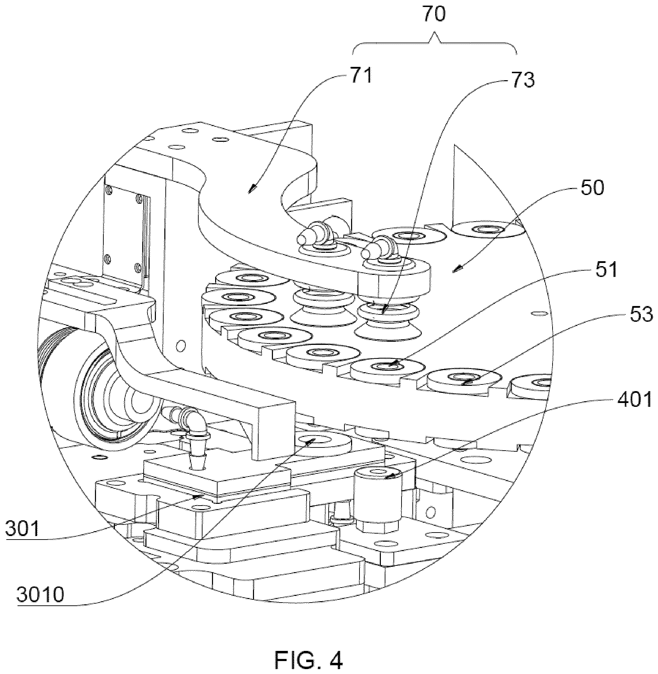

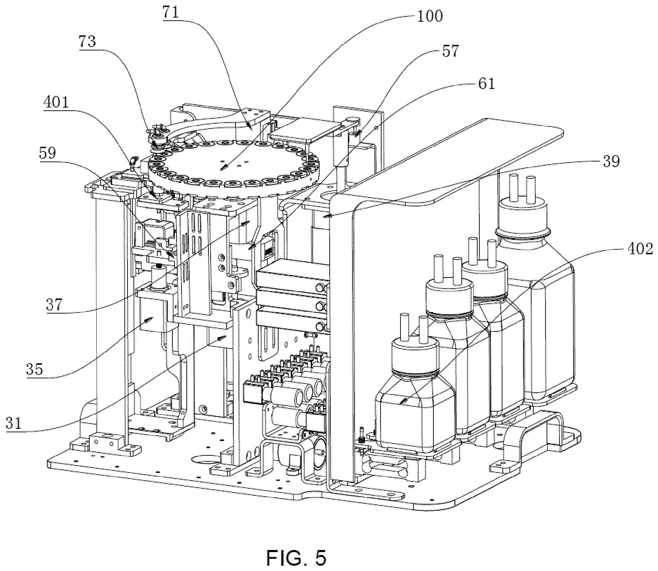

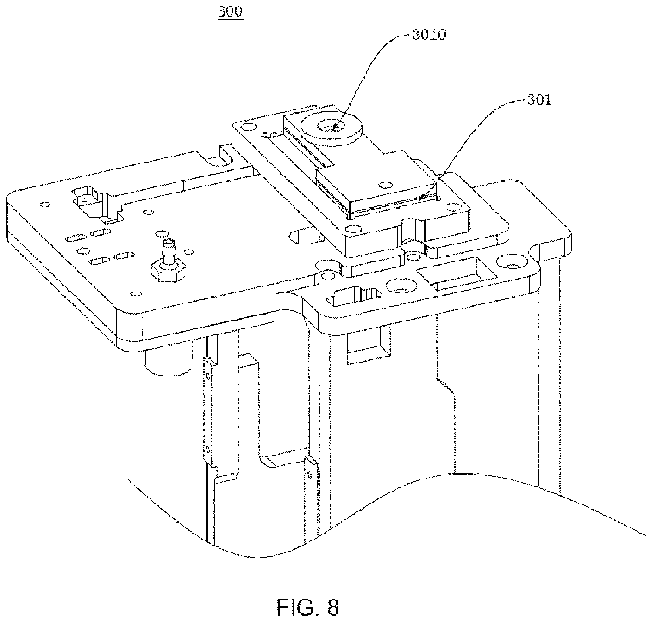

Referring to FIG. 1 to FIG. 9, the present example provides a multi-well sample feeding cell counter 1000, including:
a housing 200, wherein an accommodation space 201 is provided inside the housing 200, and the housing 200 is provided with a sample adding port 202;
a multi-well sample feeding apparatus 100, wherein the multi-well sample feeding apparatus 100 is provided in the accommodation space 201, the multi-well sample feeding apparatus 100 includes a multi-well sample adding plate 50, the multi-well sample adding plate 50 includes a plurality of sample adding holes 51, and the sample adding holes 51 can accommodate samples (not shown in the drawings);
a counting module 300, wherein the counting module 300 is detachably mounted in the accommodation space 201, the counting module 300 is configured to detect the samples, and the counting module 300 includes a counting chip 301; and
a control system 700, wherein the control system 700 can control the rotation of the multi-well sample adding plate 50 and enable at least one sample adding hole 51 to correspond to the sample adding port 202 in position, and can also enable at least one sample adding hole 51 to correspond to a sample feeding hole 3010 of the counting chip 301 in position.

In the above, the architecture and the hardware and the like used of the control system 700 may all refer to the control system of the existing cell counters. For example, it may be a collective name of a series of control and processing components, for example, it may be a controller including electromechanical component such as control valve, an acquisition processing memory of an electrical pulse signal and/or an image signal, a screen display configured to complete screen display and interactive operations, etc. For example, in the present example, the control system 700 is configured with a display screen 500 for display and touch-control operation. The display screen 500 is provided on the housing 200.

The counting chip 301, a trypan blue liquid outlet mechanism 400, and a pressure source and so on described below may also refer to those of existing cell counters, for example, the counting chip 301 may refer to the existing microfluidic chip, and the pressure source may refer to the positive pressure air pump or liquid pumps, etc. The present example does not improve the above devices, and they will not be described again herein. Meanwhile, the counting module 300 not only has a counting function but also may have other signal detection functions. In an implementation of the present example, the counting module 300 is configured to realize flow of the cell samples within the chip and signal detection.

Specifically, the multi-well sample feeding apparatus 100 further includes a mounting bracket 10, a motor unit 30 and a vacuum chuck mechanism 70, and the mounting bracket 10 is erected in the accommodation space 201.

The motor unit 30 includes a first linear stepper motor 31, a second linear stepper motor 33 and a rotating stepper motor 37.

A central portion of the multi-well sample adding plate 50 is connected to an output end of the rotating stepper motor 37, the first linear stepper motor 31 is mounted on the mounting bracket 10, the rotating stepper motor 37 is connected to an output end of the first linear stepper motor 31 and can move up and down under the driving of the first linear stepper motor 31, and the multi-well sample adding plate 50 is arranged with a plurality of sample adding holes 51 provided in an axial direction at a position close to an edge.

The vacuum chuck mechanism 70 includes a chuck holder 71 and a vacuum chuck 73. The chuck holder 71 is connected to an output end of the second linear stepper motor 33. The vacuum chuck 73 is mounted on the chuck holder 71 and located above the multi-well sample adding plate 50. The position of the vacuum chuck 73 is at least corresponding to the position of one sample adding hole 51. The position of at least one vacuum chuck 73 is corresponding to the position of the sample feeding hole 3010 of the counting chip 301. The multi-well sample adding plate 50 is located between the vacuum chuck 73 and the counting chip 301.

In sample adding process, the sample is added to one sample adding hole 51 at a sample adding position, the control system 700 controls the rotating stepper motor 37 to operate, and the multi-well sample adding plate 50 rotates and allows the next sample adding hole 51 to be at the sample adding position.

In sample feeding process, the multi-well sample adding plate 50 is rotated driven by the rotating stepper motor 37, so that the sample adding hole 51 having been added with the sample moves to below the vacuum chuck 73 and stops, the control system 700 controls the first linear stepper motor 31 to operate such that the rotating stepper motor 37 is lowered and the multi-well sample adding plate 50 is lowered to be fitted with the counting chip 301, the sample adding hole 51 is in communication with the sample feeding hole 3010, and the control system 700 controls the second linear stepper motor 33 to operate so that the vacuum chuck 73 is lowered and fitted with the multi-well sample adding plate 50. The sample adding hole 51, the vacuum chuck 73 and the sample feeding hole 3010 of the counting chip 301 form a sealed pipeline, and the sample in the sample adding hole 51 can enter the sample feeding hole 3010 of the counting chip 301 under the action of a pressure source connected to the counting chip 301.

In the above, the sample adding position refers to an opening (sample adding port 202) on the housing 200 configured for adding sample, and when the sample adding hole 51 is rotated to this position, the sample may be added to the sample adding hole 51 from the outside of the housing 200.

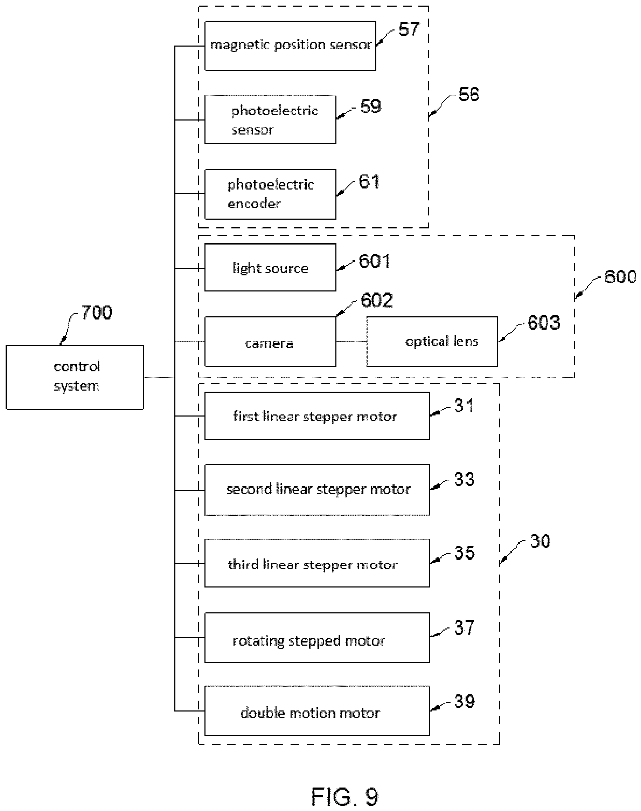

As can be seen from the above, the rotating stepper motor 37 is configured to drive the multi-well sample adding plate 50 to rotate about its own axis. The first linear stepper motor 31 is configured to drive the rotating stepper motor 37 and the multi-well sample adding plate 50 to move up and down as a whole. The second linear stepper motor 33 is configured to drive the chuck bracket 71 and the vacuum chuck 73 to move up and down as a whole. Moreover, in conjunction with FIG. 9, all of the rotating stepper motor 37, the first linear stepper motor 31 and the second linear stepper motor 33 operate under the control of the control system 700.

Specifically, the motor unit 30 further includes a third linear stepper motor 35, and the multi-well sample feeding cell counter 1000 further includes a trypan blue liquid outlet mechanism 400. The trypan blue liquid outlet mechanism 400 includes a liquid outlet component 401. The third linear stepper motor 35 is mounted on the mounting bracket 10. An output end of the third linear stepper motor 35 is in transmission connection with the liquid outlet component 401 and can allow the liquid outlet component 401 to move up and down.

Of course, the trypan blue liquid outlet mechanism 400 further includes a trypan blue liquid storage bottle 402, and the trypan blue liquid storage bottle 402 is in communication with the liquid outlet component 401 through a pipeline. In the above, if it is unnecessary to detect the viability, the trypan blue liquid outlet mechanism 400 may not be included, and other structures are unchanged and unaffected.

When trypan blue sample mixing is needed, the control system 700 controls the third linear stepper motor 35 to operate, so that the liquid outlet component 401 is raised, the first linear stepper motor 31 operates and allows the multi-well sample adding plate 50 to be lowered, the second linear stepper motor 33 operates and allows the vacuum chuck 73 to be lowered, then the liquid outlet component 401, the sample adding hole 51 and the vacuum chuck 73 form a sealed pipeline. The liquid outlet component 401 has a trypan blue liquid outlet.

It can be seen from the above that the third linear stepper motor 35 is configured to drive the liquid outlet component 401 to move up and down. Moreover, in conjunction with FIG. 9, the third linear stepper motor 35 operates under the control of the control system 700.

In the present example, the number of vacuum chucks 73 is two, the position of one vacuum chuck 73 is corresponding to the liquid outlet component 401, and the position of the other vacuum chuck 73 is corresponding to the sample feeding hole 3010 of the counting chip 301.

If the trypan blue sample mixing is required, one sample adding hole 51, when having been added with the sample, first moves to the liquid outlet component 401 and is corresponding to the trypan blue liquid outlet in position, then, the sealed pipeline is formed through the operation of the motor unit 30, and sample mixing is performed by means of a pressure source, and then the multi-well sample adding plate 50 is enabled to rotate through the operation of the rotating stepper motor 37, so that the sample adding hole 51 having undergone the sample mixing moves to a position corresponding to the sample feeding hole 3010 of the counting chip 301, so as to perform the subsequent sample feeding operation.

If the sample mixing is not needed, the multi-well sample adding plate 50 is enabled to rotate directly through the operation of the rotating stepper motor 37, so that the sample adding hole 51 moves to the position corresponding to the sample feeding hole 3010 of the counting chip 301, so as to perform the subsequent sample feeding operation.

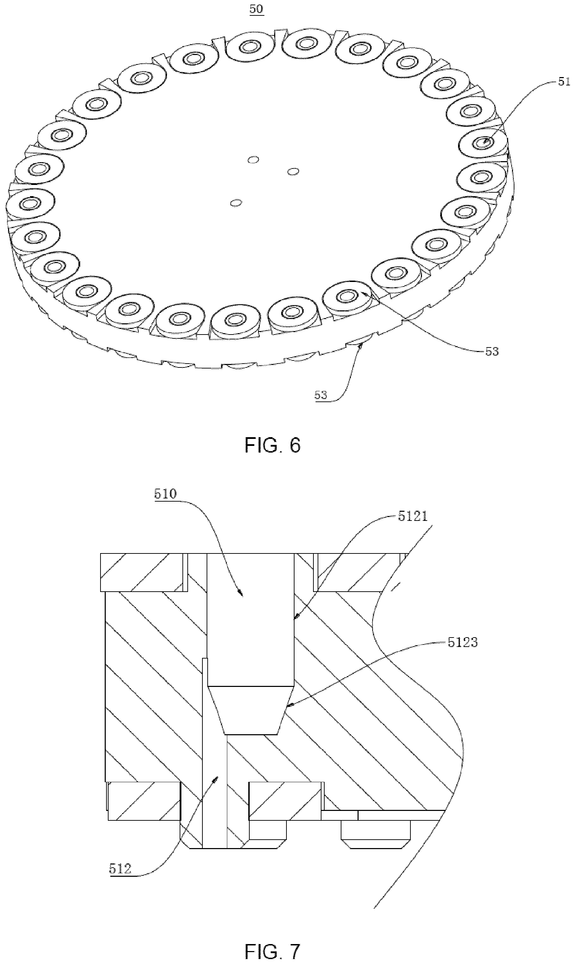

Specifically, in conjunction with FIG. 6 and FIG. 7, the sample adding hole 51 has a sample adding section 510 and a sample feeding section 512, the sample adding section 510 and the sample feeding section 512 are in communication with each other and the sample adding section 510 and the sample feeding section 512 are arranged in indirect communication. The sample adding section 510 is configured to accommodate the sample, and the sample feeding section 512 is configured to allow the sample to flow out to the counting chip 301 or allow the trypan blue of the trypan blue liquid outlet mechanism 400 to enter the sample adding hole 51. It should be noted that the "arranged in indirect communication" herein may be understood to mean that the sample adding section 510 and the sample feeding section 512 are in communication with each other, but the sample adding section 510 and the sample feeding section 512 are provided in a staggered manner, for example, the sample adding section 510 and the sample feeding section 512 are both circular hole (tapered) sections, but axes of the sample adding section 510 and the sample feeding section 512 are staggered, for example, in parallel. Meanwhile, in conjunction with FIG. 7, diameter of an exit of the sample feeding section 512 at a lower end is smaller than diameter of an entrance of the sample adding section 510 at an upper end.

More specifically, in the present example, an inner wall of the sample adding section 510 is divided into a straight cylindrical portion 5121 and a tapered cylindrical portion 5123, the straight cylindrical portion 5121 and the tapered cylindrical portion 5123 are joined together, and diameter of sectional profile of the tapered cylindrical portion 5123 gradually decreases from one end close to the straight cylindrical portion 5121 toward the other end, and the sample feeding section 512 and side wall of the tapered cylindrical portion 5123 are joined together. Thus, a structure in indirect communication is formed, and the sample may be kept in an intermediate position when being added, thereby avoiding leakage of the sample from the bottom of the sample adding hole 51 due to a too big force in the operation of sample adding.

In the present example, a sealing gasket 53 is provided at both upper and lower ends of the sample adding hole 51. A gasket structure is also provided at the sample feeding hole 3010 of the counting chip 301 and the liquid outlet component 401, in order to form a corresponding sealed pipeline in different operation situations.

The multi-well sample adding plate 50 has 25 sample adding holes 51, of which one sample adding hole 51 is an initial calibration hole. The initial calibration hole is a hole used in initialization of the cell counter. Before performing the sample adding detection, the cell counter first tries to run the motor unit 30 according to one sample adding hole 51, to ensure that the position of the sample adding hole 51 can be corresponding to a position or a device that needs to use the sample adding hole 51 such as the sample adding position, the counting chip 301, and the trypan blue liquid outlet according to the state when the cell counter operates. Any one of the sample adding holes 51 may serve as the initial calibration hole, and act as No. 0 hole when the cell counter starts to operate, and the remaining 24 sample adding holes 51 serve as sample holes during actual operation, and are configured to be placed with the samples for subsequent operation.

In addition to the solution with 25 sample adding holes 51, it is predictable that solutions with other number of sample adding holes may also be used so as to meet the requirement that operators choose instruments of different specifications, and improve the efficiency of sample detection.

Specifically, in conjunction with FIG. 1 - FIG.3, the multi-well sample feeding apparatus 100 further includes a sample adding hole cover 55, and the sample adding hole cover 55 is configured to open or close the sample adding port 202, so as to block or expose the sample adding holes 51. The sample adding hole cover 55 may be controlled manually or with other mechanical equipment to open or close the sample adding port 202. In the present example, the motor unit 30 further includes a double motion motor 39. The double motion motor 39 is mounted on the mounting bracket 10, an output end of the double motion motor 39 is connected to the sample adding hole cover 55. The sample adding hole cover 55 is located above the sample adding position, and the control system 700 can control the double motion motor 39 to operate, so that the sample adding hole cover 55 and the housing 200 block the sample adding hole 51 at the sample adding position or move the sample adding hole cover 55 to expose the sample adding hole 51 at the sample adding position. When the detection process is run, closing the sample adding hole cover 55 can avoid external contamination.

It can be seen from the above that the double motion motor 39 is configured to drive the sample adding hole cover 55 to move. Moreover, in conjunction with FIG. 9, the double motion motor 39 operates under the control of the control system 700.

In conjunction with FIG. 9, the multi-well sample feeding apparatus 100 further includes a position detection assembly 56, for example, the multi-well sample feeding apparatus 100 further includes a magnetic position sensor 57 (Hall switch device) and a photoelectric encoder 61. The magnetic position sensor 57 is mounted on the mounting bracket 10 and configured to locate an initial rotation position of the multi-well sample adding plate 50. The photoelectric encoder 61 is mounted on the rotating stepper motor 37 and is configured to feed back a rotation angle signal of the multi-well sample adding plate 50 to the control system 700. The control system 700 is configured to control the rotating stepper motor 37 to operate or stop according to the initial rotation position and the rotation angle signal of the multi-well sample adding plate 50, so that the sample adding hole 51 can move to an operation position. The photoelectric encoder 61 feeds back the rotation angle signal of the multi-well sample adding plate 50 by reading the rotation angle of the rotating stepper motor 37, because the multi-well sample adding plate 50 and an output shaft of the rotating stepper motor 37 are coaxially arranged, reading the rotation angle of the output shaft of the rotating stepper motor 37 can obtain the rotation angle of the multi-well sample adding plate 50. Through the initial rotation position and the rotation angle signal, the control system 700 can locate the position of each sample adding hole 51 and enable the same to precisely move to the desired operation position.

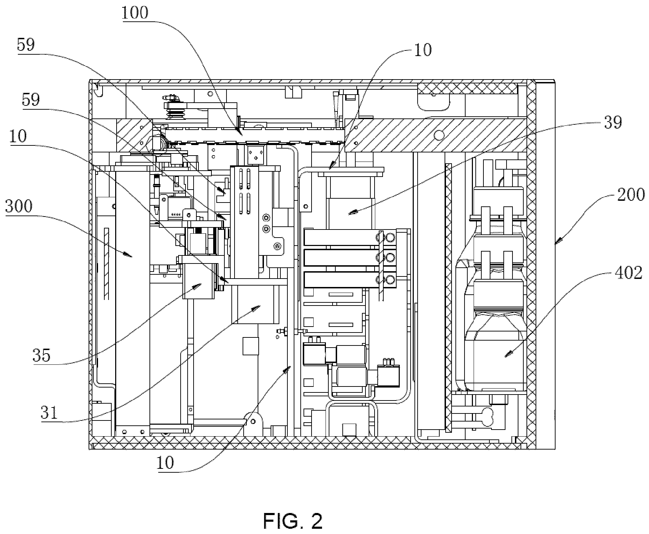

The multi-well sample feeding apparatus 100 further includes other position detection assemblies 56, for example, the multi-well sample feeding apparatus 100 further includes a photoelectric sensor 59, and the photoelectric sensor 59 is capable of detecting the position of the multi-well sample adding plate 50 in the vertical direction and capable of feeding back the position of the multi-well sample adding plate 50 in the vertical direction to the control system 700. The control system 700 is configured to control the first linear stepper motor 31 to operate according to the position of the multi-well sample adding plate 50 in the vertical direction, so that the multi-well sample adding plate 50 is raised or lowered. Further, in conjunction with FIG. 2, the photoelectric sensor 59 is divided into an upper position sensor and a lower position sensor, so as to facilitate detecting the upper and lower positions. That is, the number of the photoelectric sensors 59 is two, and the photoelectric sensors are distributed at intervals in the vertical direction.

As can be seen from the above, the control system 700 is configured to receive the initial rotation position of the multi-well sample adding plate 50 detected by the magnetic position sensor 57 and receive the rotation angle signal of the multi-well sample adding plate 50 detected by the photoelectric encoder 61, and control the operation of the rotating stepper motor 37. Meanwhile, the control system 700 is further configured to receive the position of the multi-well sample adding plate 50 in the vertical direction detected by the photoelectric sensor 59, and control the operation of the first linear stepper motor 31.

By providing the position detection assembly 56 such as the magnetic position sensor 57, the photoelectric sensor 59 and the photoelectric encoder 61, the control system 700 can better control the operation of the first linear stepper motor 31 and the rotating stepper motor 37, so as to realize precise control of upper and lower positions of the multi-well sample adding plate 50 and the liquid outlet component 401, as well as precise control of the rotation angle of the multi-well sample adding plate 50 itself.

In conjunction with FIG. 9, the multi-well sample feeding cell counter 1000 further includes an image acquisition module 600, and the image acquisition module 600 is installed in the accommodation space 201 and is electrically connected to the counting module 300. The image acquisition module 600 may be implemented by adopting an existing image acquisition means, which is not specifically defined herein. For example, the image acquisition module 600 may include a light source 601, a camera 602 and an optical lens 603. The light source 601 and the camera 602 are electrically connected to the control system 700, respectively, and the optical lens 603 is connected to the camera 602 through a standard lens interface. In the above, the optical lens 603 may be a single lens or a combination of a plurality of lenses. In the above, the light source 601 is provided on one side of the counting chip 301 and faces an image acquisition area of the counting chip 301, the camera 602 is provided on the other side of the counting chip 301, and the optical lens 603 faces the above image acquisition area. Through the above design, the light source 601 can transmit light to the above image acquisition area under the control of the control system 700, and the camera 602 can acquire a plurality of images of the sample flowing through the above image acquisition area under the control of the control system 700, and send the images to the control system 700 to process.

The principle of the multi-well sample feeding cell counter 1000 provided in the present example is as follows.

In use, position initialization is performed first, and each component moves to an initial position. The third linear stepper motor 35 allows the liquid outlet component 401 to be located at the lowest position, the second linear stepper motor 33 drives the chuck holder 71 to be located at the highest position, and meanwhile also allows the vacuum chuck 73 to be located at the highest position. The first linear stepper motor 31 drives the multi-well sample adding plate 50 to be located at the highest position. The rotating stepper motor 37 drives the multi-well sample adding plate 50 to rotate to the sample adding hole 51 (which can be understood as No. 1 sample adding hole 51) after the No. 0 sample adding hole 51, to be aligned with the sample adding port 202 according to a zero position determined by the No. 0 sample adding hole 51 having been set. The lowest position, the highest position, and the like in the above are all limit positions that each component itself can reach, and the high and low positions of respective components are not compared with each other.

After the position initialization, the counting chip 301 and the trypan blue liquid path are initialized, and an initialization manner may refer to an initialization manner used by a common cell counter that only can carry out single sample adding detection. The difference between the present example and the general cell counters lies in that the sample adding hole of the cell counter for single sample adding detection is initialized independently with each liquid path or sealed pipeline of the cell counter, while in the present example, one sample adding hole 51 may be selected as an initialization calibration hole in advance to perform an initialization operation, with similar operation mode to that of the cell counter for single sample adding detection.

After the initialization is completed, the trypan blue pipeline is filled up with the trypan blue, and all the channels on the counting chip 301 are filled up with sheath fluid. It should be noted that, the sheath liquid may also refer to the prior art, and is not described herein again.

When a plurality of samples need to be detected, the sample adding hole cover 55 may be opened first by the double motion motor 39, so that the sample adding port 202 provided on the housing 200 is exposed, and one sample adding hole 51 is exposed. After the sample is added, the rotating stepper motor 37 operates, so that the next sample adding hole 51 is exposed, thereby facilitating the sample adding operation of the next sample. Analogically for the other sample adding holes 51, after the samples are added, the double motion motor 39 operates, so that the sample adding hole cover 55 closes the sample adding port 202 provided on the housing 200.

Further, function selection of next step may be performed according to requirements, for example, to perform cell counting and viability detection, one sample adding hole 51 having been added with the sample is first controlled to move to above the liquid outlet component 401 of the trypan blue liquid outlet mechanism 400, and perform sample mixing, then move to the sample feeding hole 3010 of the counting chip 301 to perform the subsequent sample feeding operation.

If only counting is required, the sample adding hole 51 having been added with the sample is directly controlled to move to the sample feeding hole 3010 of the counting chip 301, and the subsequent operation is performed.

In the above, for the implementation of trypan blue sample mixing, cell counting, and the like, reference may be made to the implementation of the existing cell counter. Taking the cell counting as an example, for example, the counting mode of the absolute count of the whole sample may be adopted to allow the whole sample to flow through the counting chip 301, to perform the cell counting of the whole sample amount. All of these can refer to the prior art, and are not described again in the present example.

According to the above operations, the multi-well sample feeding cell counter 1000 in the present example may complete detection of up to 24 samples, saving operation time and effort. When the multi-well sample adding plates 50 used by the multi-well sample feeding cell counters 1000 of different specifications are different, the number of samples detected is also different correspondingly.

Besides, as the counting module 300 is detachably mounted, the counting chips 301 of different structures may be designed to adapt to different detection objects for detection objects of different sizes (for example, bacteria are as small as hundreds of nanometers to a few micrometers, and common cell sizes are a few micrometers to a few tens of micrometers). Moreover, designing the multi-well sample feeding cell counter 1000 in the form of a replaceable counting module 300 increases the flexibility of the system, and may adapt to user's different detection requirements.

To sum up, for the multi-well sample feeding cell counter 1000, through cooperation of the multi-well sample adding plate 50 of the multi-well sample feeding apparatus 100 with the motor unit 30 and the position detection assembly 56 and others, under the control of the control system 700, the operator can add a plurality of samples when adding the samples, then, the sample in each sample adding hole 51 is subjected to subsequent detection by the counting module 300 or the like, without the need of detecting the samples one by one as in the case of the prior cell counters. Thus, the time required for sample adding operation is saved when detecting the cell samples, the operator's workload is reduced, and further the efficiency of the whole detection process is improved. Furthermore, there is no need to stay by the instrument all the time, and it is convenient for the operator to handle other affairs during the detection process.

The present example further provides a counting method, which uses the above multi-well sample feeding cell counter 1000, and the method includes:
adding a sample to the sample adding hole 51 corresponding to the sample adding port 202 through the sample adding port 202 of the housing 200, controlling rotation of the multi-well sample adding plate 50 by the control system 700, so that another sample adding hole 51 on the multi-well sample adding plate 50 is corresponding to the sample adding port 202, and adding a sample to this sample adding hole 51, and repeating such operations multiple times analogically; and
controlling the sample adding hole 51 having been added with the sample to move to the sample feeding hole 3010 of the counting chip 301, and counting, by the counting chip 301, the cells in the sample.

Multiple repetitions may realize the addition of samples in all of the sample adding holes 51. The structure of the multi-well sample feeding cell counter 1000 may refer to the above description, and therefore the specific method thereof may also refer to the above description.

The above-mentioned are merely for specific examples of the present disclosure and not intended to limit the present disclosure. For one skilled in the art, various modifications and variations may be made to the present disclosure. Any modifications, equivalent substitutions, improvements and the like made within the spirit and principle of the present disclosure should be included within the scope of protection of the present disclosure. Therefore, the scope of protection of the present disclosure should be based on the scope of protection of the claims.

### Industrial Applicability

To sum up, the present disclosure provides a multi-well sample feeding cell counter and a counting method. The multi-well sample feeding cell counter is simple in structure and easy in operation, and may save the time of sample adding operation required when detecting the cell samples, reduce the operator's workload, and further improve the efficiency of the whole detection process.

## Claims

1. A multi-well sample feeding cell counter, **characterized by** comprising:
a housing, wherein an accommodation space is formed inside the housing, and the housing has a sample adding port;
a multi-well sample feeding apparatus, wherein the multi-well sample feeding apparatus is provided in the accommodation space, the multi-well sample feeding apparatus comprises a multi-well sample adding plate, the multi-well sample adding plate comprises a plurality of sample adding holes, and the sample adding holes are capable of accommodating samples;
a counting module, wherein the counting module is detachably mounted in the accommodation space, the counting module is configured to detect the samples, and the counting module comprises a counting chip; and
a control system, wherein the control system is capable of controlling the multi-well sample adding plate to rotate, so as to enable at least one of the sample adding holes to correspond to the sample adding port in position, and also is capable of enabling at least one of the sample adding holes to correspond to a sample feeding hole of the counting chip in position.

2. The multi-well sample feeding cell counter according to claim 1, wherein the multi-well sample feeding apparatus further comprises a mounting bracket, a motor unit and a vacuum chuck mechanism, wherein the mounting bracket is provided in the accommodation space;
the motor unit comprises a first linear stepper motor, a second linear stepper motor and a rotating stepper motor,
wherein a central portion of the multi-well sample adding plate is connected to an output end of the rotating stepper motor, the first linear stepper motor is mounted on the mounting bracket, the rotating stepper motor is connected to an output end of the first linear stepper motor and is capable of moving up and down driven by the first linear stepper motor, and a plurality of the sample adding holes are arranged at a position close to an edge of the multi-well sample adding plate and in an axial direction; and
the vacuum chuck mechanism comprises a chuck holder and at least one vacuum chuck, the chuck holder is connected to an output end of the second linear stepper motor, the at least one vacuum chuck is mounted on the chuck holder and located above the multi-well sample adding plate, the at least one vacuum chuck is at least corresponding to one of the sample adding holes in position, the at least one vacuum chuck is corresponding to the sample feeding hole of the counting chip in position, and the multi-well sample adding plate is located between the at least one vacuum chuck and the counting chip, wherein
during adding a sample, the sample is added to one of the sample adding holes at a sample adding position, the control system controls the rotating stepper motor to operate, such that the multi-well sample adding plate rotates to allow a next one of the sample adding holes to be at the sample adding position; and
during feeding a sample, the multi-well sample adding plate is rotated driven by the rotating stepper motor, so that a sample adding hole having been added with the sample moves below one of the at least one vacuum chuck and stops, the control system controls the first linear stepper motor to operate such that the rotating stepper motor is lowered and the multi-well sample adding plate is lowered to be fitted with the counting chip, the sample adding hole is in communication with the sample feeding hole, and the control system controls the second linear stepper motor to operate, so that the one of the at least one vacuum chuck is lowered and fitted with the multi-well sample adding plate, the sample adding hole, the one of the at least one vacuum chuck and the sample feeding hole of the counting chip form a sealed pipeline, and the sample in the sample adding hole is capable of entering the sample feeding hole of the counting chip under an action of a pressure source connected to the counting chip.

3. The multi-well sample feeding cell counter according to claim 2, wherein the motor unit further comprises a third linear stepper motor, and the multi-well sample feeding cell counter further comprises a trypan blue liquid outlet mechanism, wherein the trypan blue liquid outlet mechanism comprises a liquid outlet component, the third linear stepper motor is mounted on the mounting bracket, an output end of the third linear stepper motor is in transmission connection with the liquid outlet component and is capable of moving the liquid outlet component up and down,
wherein when the sample needs to be mixed with trypan blue, the control system controls the third linear stepper motor to operate so that the liquid outlet component is raised, and controls the first linear stepper motor to operate to allow the multi-well sample adding plate to be lowered and the second linear stepper motor to operate to allow the at least one vacuum chuck to be lowered, then the liquid outlet component, the sample adding hole and one of the at least one vacuum chuck form a sealed pipeline.

4. The multi-well sample feeding cell counter according to claim 3, wherein the trypan blue liquid outlet mechanism further comprises a trypan blue liquid storage bottle, wherein the trypan blue liquid storage bottle is in communication with the liquid outlet component through a pipeline.

5. The multi-well sample feeding cell counter according to claim 3 or 4, wherein two vacuum chucks are provided, a position of one of the vacuum chucks is corresponding to the liquid outlet component, and a position of the other one of the vacuum chucks is corresponding to the sample feeding hole of the counting chip.

6. The multi-well sample feeding cell counter according to any one of claims 1-5, wherein each of the sample adding holes has a sample adding section and a sample feeding section, wherein the sample adding section and the sample feeding section are in communication with each other and the sample adding section and the sample feeding section are not arranged in direct communication.

7. The multi-well sample feeding cell counter according to claim 6, wherein an inner wall of the sample adding section is divided into a straight cylindrical portion and a tapered cylindrical portion, wherein the straight cylindrical portion and the tapered cylindrical portion are joined together, and a diameter of a sectional profile of the tapered cylindrical portion gradually decreases from one end close to the straight cylindrical portion toward the other end, and the sample feeding section and a side wall of the tapered cylindrical portion are joined together.

8. The multi-well sample feeding cell counter according to any one of claims 1-7, wherein a sealing gasket is provided at each of upper and lower ends of each of the sample adding holes.

9. The multi-well sample feeding cell counter according to any one of claims 1-8, wherein the multi-well sample adding plate has 25 sample adding holes, and one of the sample adding holes is an initial calibration hole.

10. The multi-well sample feeding cell counter according to any one of claims 2-5, wherein the multi-well sample feeding apparatus further comprises a sample adding hole cover, wherein the sample adding hole cover is configured to open or close the sample adding port, so as to block or expose the sample adding holes.

11. The multi-well sample feeding cell counter according to claim 10, wherein the motor unit further comprises a double motion motor, wherein the double motion motor is mounted on the mounting bracket, an output end of the double motion motor is connected to the sample adding hole cover, the sample adding hole cover is located above the sample adding position, and the control system is capable of controlling the double motion motor to operate, so that the sample adding hole cover and the housing block a sample adding hole at the sample adding position or move the sample adding hole cover to expose the sample adding hole at the sample adding position.

12. The multi-well sample feeding cell counter according to any one of claims 2-5, wherein the multi-well sample feeding apparatus further comprises a magnetic position sensor and a photoelectric encoder, wherein the magnetic position sensor is mounted on the mounting bracket and configured to set an initial rotation position of the multi-well sample adding plate, the photoelectric encoder is mounted on the rotating stepper motor and configured to feed back a rotation angle signal of the multi-well sample adding plate to the control system, the control system is configured to control the rotating stepper motor to operate or stop according to the initial rotation position and the rotation angle signal of the multi-well sample adding plate, so that the sample adding hole is capable of moving to an operation position.

13. The multi-well sample feeding cell counter according to claim 12 or any one of claims 2-5, wherein the multi-well sample feeding apparatus further comprises at least one photoelectric sensor, wherein the at least one photoelectric sensor is capable of detecting a position of the multi-well sample adding plate in a vertical direction and capable of feeding back the position of the multi-well sample adding plate in the vertical direction to the control system, the control system is configured to control the first linear stepper motor to operate according to the position of the multi-well sample adding plate in the vertical direction, so that the multi-well sample adding plate is raised or lowered.

14. The multi-well sample feeding cell counter according to claim 13, wherein two photoelectric sensors are provided, and the photoelectric sensors are distributed at intervals in the vertical direction.

15. The multi-well sample feeding cell counter according to any one of claims 1-14, wherein the multi-well sample feeding cell counter further comprises an image acquisition module, wherein the image acquisition module is installed in the accommodation space and is electrically connected to the counting module.

16. The multi-well sample feeding cell counter according to claim 15, wherein the image acquisition module comprises a light source, a camera and an optical lens, wherein the light source and the camera are electrically connected to the control system, respectively, and the optical lens is connected to the camera, wherein the light source is provided on one side of the counting chip and faces an image acquisition area of the counting chip, the camera is provided on the other side of the counting chip, and the optical lens faces the image acquisition area, the light source is capable of transmitting light to the image acquisition area under control of the control system, and the camera is capable of acquiring a plurality of images of the sample flowing through the image acquisition area under control of the control system, and send the images to the control system to process.

17. A counting method, **characterized by** using the multi-well sample feeding cell counter according to any one of claims 1-16, wherein the method comprises:
adding a sample to a sample adding hole corresponding to the sample adding port through the sample adding port of the housing, controlling, by the control system, the multi-well sample adding plate to rotate, so that another sample adding hole on the multi-well sample adding plate is corresponding to the sample adding port; and adding a sample to the another sample adding hole, and repeating such operations multiple times; and
controlling the sample adding hole having been added with the sample, to move to the sample feeding hole of the counting chip, and counting, by the counting chip, cells in the sample.
